(19) Europäisches Patentamt
European Patent Office
Office européen des brevets

(11) **EP 4 575 738 A1**

(12) **EUROPEAN PATENT APPLICATION**
published in accordance with Art. 153(4) EPC

(43) Date of publication:
**25.06.2025 Bulletin 2025/26**

(21) Application number: 23868403.9

(22) Date of filing: **21.08.2023**

(51) International Patent Classification (IPC):
*G06F 3/04842* (2022.01)    *G06F 3/04845* (2022.01)
*G06F 3/0481* (2022.01)    *G06V 30/32* (2022.01)
*G06V 30/148* (2022.01)

(52) Cooperative Patent Classification (CPC):
**G06F 3/0481; G06F 3/04842; G06F 3/04845;
G06V 30/148; G06V 30/32**

(86) International application number:
**PCT/KR2023/012361**

(87) International publication number:
**WO 2024/063346 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.09.2022 KR 20220118513
28.10.2022 KR 20220141917**

(71) Applicant: **Samsung Electronics Co., Ltd.
Suwon-si, Gyeonggi-do 16677 (KR)**

(72) Inventors:
• **KIM, Dohyeon
Suwon-si, Gyeonggi-do 16677 (KR)**
• **LEE, Donghyuk
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE FOR DISPLAYING TEXT AND METHOD THEREFOR**

(57) An electronic device is provided. The electronic device includes a display, memory storing one or more computer programs, and one or more processors communicatively coupled to the display and the memory, wherein the one or more computer programs include computer-executable instructions that, when executed by the one or more processors individually or collectively, cause the electronic device to display an image in the display, based on a first input indicating to select a text in the image, a first visual object overlappingly on a portion in the image selected by the first input, display, based on one or more characters included in the portion of the image overlapped by the first visual object, a second visual object including the one or more characters in association with the first visual object, and change, based on the portion of the image overlapped by the first visual object having a size changed based on a second input indicating to change the size of the first visual object overlapped on the image, the one or more characters included in the second visual object.

FIG. 2

**Description**

[Technical Field]

The disclosure relates to an electronic device for displaying a text and a method therefore.

[Background Art]

An electronic device that extracts a text from handwriting indicated by strokes drawn by a user is being developed. For example, the user may draw the strokes indicating the handwriting by moving a finger, a stylus, and/or a digitizer contacted on a display of the electronic device or moving a pointing device (e.g., a mouse) connected to the electronic device. From the strokes, the electronic device may identify a letter such as an alphabet. Based on identifying one or more characters, the electronic device may identify a text including the one or more characters.

**[DISCLOSURE]**

[Technical Solution]

According to an embodiment, an electronic device may comprise a display and a processor. The processor may be configured to display an image in the display. The processor may be configured to display, based on a first input indicating to select a text in the image, a first visual object overlappingly on a portion in the image selected by the first input. The processor may be configured to display, based on one or more characters included in the portion of the image overlapped by the first visual object, a second visual object including the one or more characters in association with the first visual object. The processor may be configured to change, based on the portion of the image overlapped by the first visual object having a size changed based on a second input indicating to change the size of the first visual object overlapped on the image, the one or more characters included in the second visual object.

According to an embodiment, a method of an electronic device may comprise displaying an image in the display. The method of the electronic device may comprise displaying, based on a first input indicating to select a text in the image, a first visual object overlappingly on a portion in the image selected by the first input. The method of the electronic device may comprise displaying, based on one or more characters included in the portion of the image overlapped by the first visual object, a second visual object including the one or more characters in association with the first visual object. The method of the electronic device may comprise changing, based on the portion of the image overlapped by the first visual object having a size changed based on a second input indicating to change the size of the first visual object overlapped on the image, the one or more characters included in the second visual object.

According to an embodiment, one or more programs included in a computer readable storage medium storing the one or more programs, when executed by an electronic device, may cause a processor of the electronic device to display an image in a display. The one or more programs, when executed by the processor of the electronic device, may cause the processor of the electronic device to display, based on a first input indicating to select a text in the image, a first visual object overlappingly on a portion in the image selected by the first input. The one or more programs, when executed by the processor of the electronic device, may cause the processor of the electronic device to display, based on one or more characters included in the portion of the image overlapped by the first visual object, a second visual object including the one or more characters in association with the first visual object. The one or more programs, when executed by the processor of the electronic device, may cause the processor of the electronic device to change, based on the portion of the image overlapped by the first visual object having a size changed based on a second input indicating to change the size of the first visual object overlapped on the image, the one or more characters included in the second visual object.

**[DESCRIPTION OF THE DRAWINGS]**

FIG. 1 is an example of a block diagram of an electronic device in a network environment according to an embodiment.
FIG. 2 is an example of a screen of an electronic device for obtaining a text included in an image, according to an embodiment.
FIG. 3 is an example of a block diagram of an electronic device according to an embodiment.
FIG. 4A is an example of a screen of an electronic device displaying a text included in an image, according to an embodiment.
FIG. 4B is an example of a screen of an electronic device displaying a text included in an image, according to an embodiment.

FIG. 5A is an example of a screen of an electronic device for obtaining a text included in an image, according to an embodiment.

FIG. 5B is an example of a screen of an electronic device for obtaining a text included in an image, according to an embodiment.

FIG. 5C is an example of a screen of an electronic device for obtaining a text included in an image, according to an embodiment.

FIG. 6 is an example of an operation of an electronic device that segments a text by using distribution information obtained from an image, according to an embodiment.

FIG. 7 is an example of a flowchart of an operation of an electronic device according to an embodiment.

## [MODE FOR INVENTION]

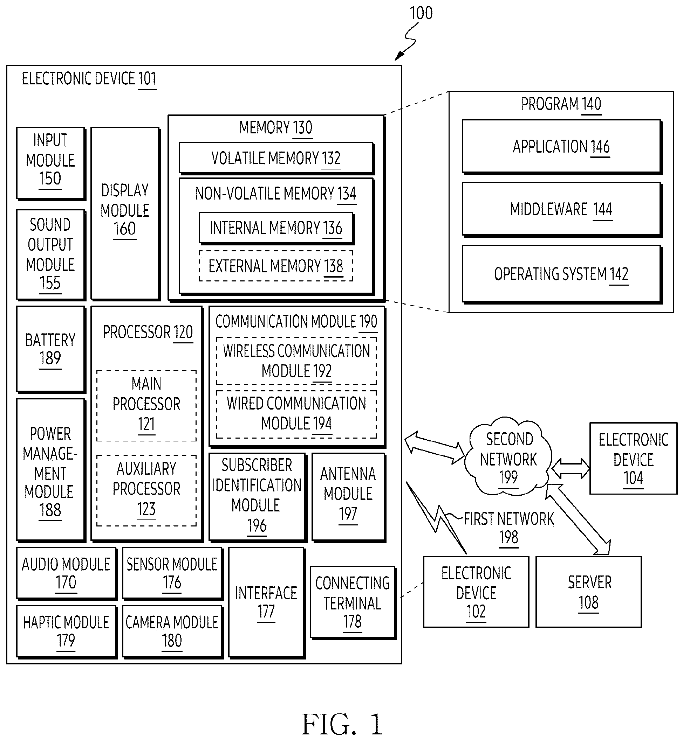

FIG. 1 is an example of a block diagram of an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a fifth-generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

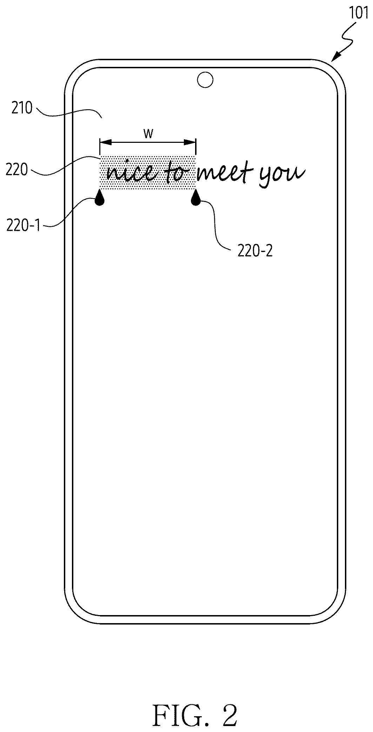

FIG. 2 is an example of a screen of an electronic device for obtaining a text included in an image, according to an embodiment. An electronic device 101 of FIG. 2 may be an example of the electronic device of FIG. 1. Operations of FIG. 2 may be executed by the processor 120 of FIG. 1.

Referring to FIG. 2, the electronic device 101 may include a display 210. The electronic device 101 may display an image in the display 210. For example, the display 210 of the electronic device 101 may include a sensor (e.g., a touch screen panel (TSP)) for detecting an external object (e.g., a finger of a user, a stylus pen) on the display 210. For example, based on the TSP, the electronic device 101 may detect an external object contacting the display 210 or floating on the display 210. For example, the electronic device 101 may identify an input for an area in which the external object is detected based on detecting the external object. For example, based on receiving an input from the external object, the electronic device 101 may display a first visual object 220 matched to the input on at least a portion in the image. For example, the first visual object 220 may be displayed together with second visual objects 220-1 and 220-2 for indicating an area selected based on the input.

According to an embodiment, based on displaying an image through the display 210, the electronic device 101 may receive an input for selecting at least a portion in the image. For example, based on receiving the input for selecting at least a portion in the image, the electronic device 101 may display the first visual object 220 overlappingly on a portion matching the selection.

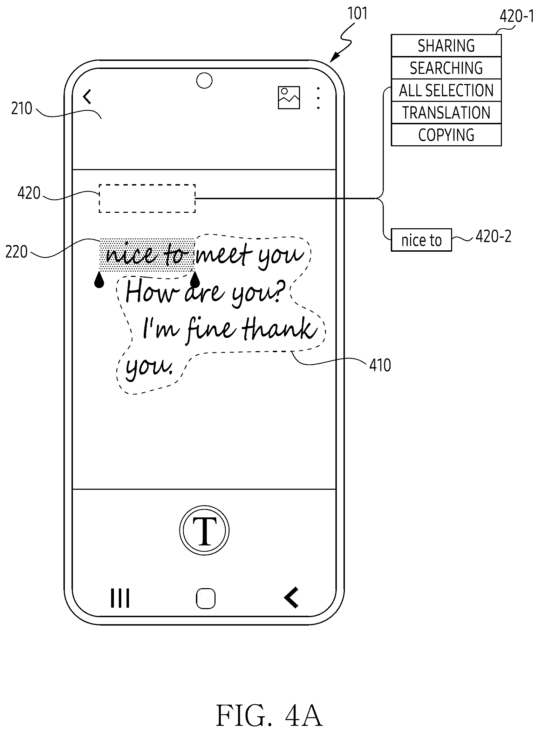

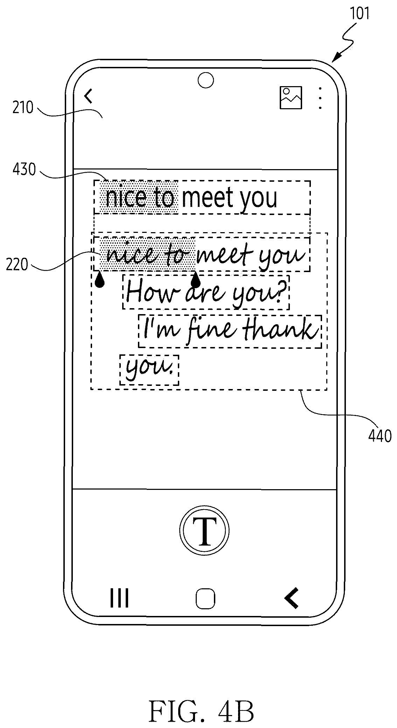

According to an embodiment, the electronic device 101 may identify one or more characters included in the first visual object 220 while displaying the first visual object 220. For example, the electronic device 101 may identify the one or more characters matching the selected area in the image. The electronic device 101 may display a second visual object different from the first visual object 220 matched to the characters based on identifying the one or more characters. An operation of displaying the one or more characters by using the second visual object different from the first visual object 220 will be described later in FIG. 4.

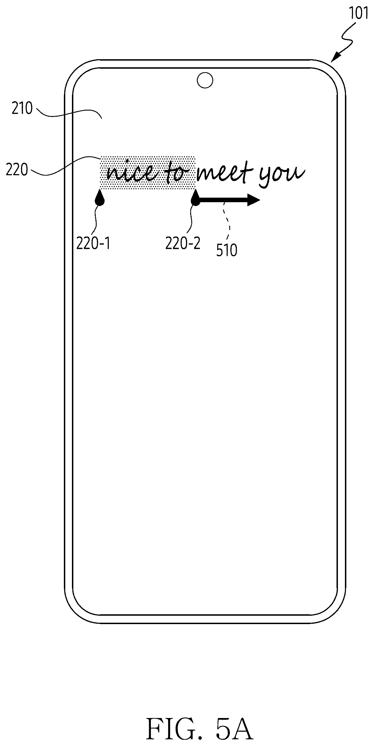

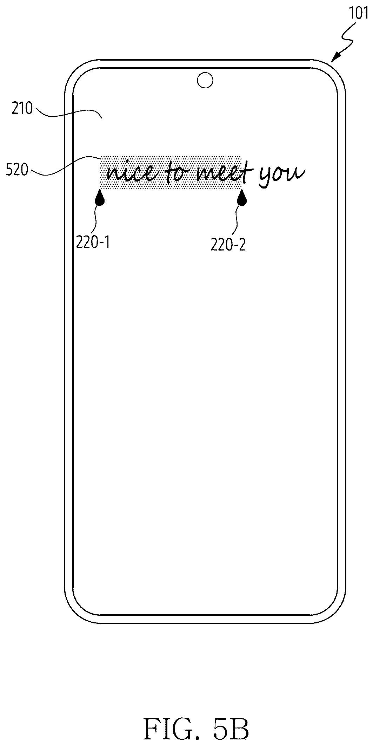

According to an embodiment, the electronic device 101 may display the second visual objects 220-1 and 220-2 different from the first visual object 220 for indicating an area of the first visual object 220. For example, the second visual objects 220-1 and 220-2 may display a width w of the first visual object 220. The electronic device 101 may receive an input for changing a size of the first visual object 220. For example, the input for changing the size of the first visual object 220 may include an input for the second visual objects 220-1 and 220-2. The electronic device 101 may receive the input for the second visual objects 220-1 and 220-2. For example, the input for the second visual objects 220-1 and 220-2 may include an input of dragging at least one of the second visual objects 220-1 and 220-2. For example, the input for the second visual objects 220-1 and 220-2 may include an input of dragging an end (e.g., at least one of a start end or a terminal end) of the first visual object 220. The operation for changing the first visual object 220 and/or the second visual objects 220-1 and 220-2 will be described later in FIGS. 5A and/or 5B.

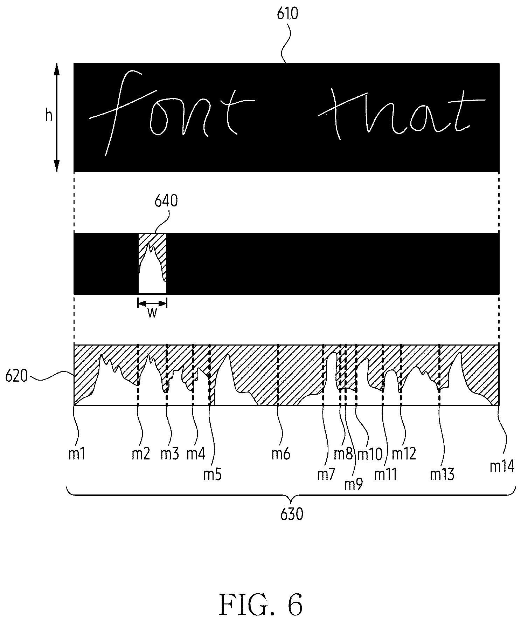

According to an embodiment, the electronic device 101 may display the one or more characters matching the first visual object 220 through the display 210 based on identifying the first visual object 220. An operation for segmenting the one or more characters included in the first visual object 220 to display the one or more characters matching the first visual object 220 through the display 210 will be described later in FIG. 6.

As described above, according to an embodiment, the electronic device 101 may identify the one or more characters matched to the first visual object 220. Based on identifying the one or more matched characters, the electronic device 101 may display, overlappingly on the image displayed in the display 210 by using, the second visual object different from the first visual object 220 for indicating a selection of the matched one or more characters. The electronic device 101 may enhance a user experience of the electronic device 101 by displaying a text matched to the one or more characters in the display 210 based on identifying the one or more characters.

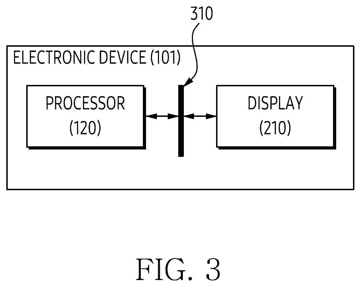

FIG. 3 is an example of a block diagram of an electronic device according to an embodiment. An electronic device 101 of FIG. 3 may be an example of the electronic device 101 of FIGS. 1 and/or 2. A display 210 of FIG. 3 may be an example of the display 210 of FIG. 2. Operations of FIG. 3 may be executed by the processor 120 of FIG. 1.

Referring to FIG. 3, the electronic device 101 according to an embodiment may include the processor 120 and/or the display 210. The processor 120 and the display 210 may be electronically and/or operably coupled with each other by an electronic component such as a communication bus 310. For example, although illustrated based on different blocks, an embodiment is not limited thereto. For example, a portion (e.g., the processor 120 and/or the display 210) of hardware components illustrated in FIG. 3 may be included in a single integrated circuit, such as a system on a chip (SoC). A type and/or the number of the hardware components included in the electronic device 101 are not limited as illustrated in FIG. 3. For example, the electronic device 101 may include only a portion of the hardware components illustrated in FIG. 3. The processor 120 and/or the display 210 are illustrated as singular, but may be plural.

The processor 120 of the electronic device 101 according to an embodiment may correspond to at least a portion of the processor 120 of FIG. 1. The processor 120 according to an embodiment may include a hardware component for processing data based on one or more instructions. The hardware component for processing data may include, for example, an arithmetic and logic unit (ALU), a floating point unit (FPU), a field programmable gate array (FPGA), an application processor (AP), a micro-computer and/or a micom controller (Micom), and/or a central processing unit (CPU). The number of the processor 120 may be one or more. For example, the processor 120 may have a structure of a multi-core processor such as a dual core, a quad core, or a hexa core. For example, the processor 120 may have a structure of a single core processor such as a single core.

According to an embodiment, the display 210 of the electronic device 101 may be controlled by a controller, such as the processor 120, and may output visualized information to a user. The display 210 may include a flat panel display (FPD) and/or electronic paper. The display 210 may include a deformable display. The FPD may include a light emitting diode (LED). The LED may include an organic light emitting diode (OLED).

For example, the display 210 may include at least one of a cover panel (or C-panel) for protecting the display 210, a base substrate, a pixel layer (or organic light emitting diode layer) including pixels that emit light based on a voltage applied from a thin film transistor (TFT) layer formed on the base substrate, or a polarizing layer positioned on the pixel layer. For example, the substrate may be formed of a plurality of layers.

The processor 120 of the electronic device 101 according to an embodiment may display an image in the display 210 by controlling the display 210. In a state of displaying an image in the display 210, the processor 120 may receive an input for selecting a portion of the image through the display 210. The processor 120 may receive a first input indicating to select a text from the image. The processor 120 may display a first visual object (e.g., the first visual object 220 of FIG. 2) overlappingly on a portion of the image selected by the first input based on the first input.

According to an embodiment, the processor 120 may identify one or more characters included in the portion of the image overlapped by the first visual object. For example, when identifying the one or more characters, the processor 120 of the electronic device 101 may execute an optical character recognition (OCR) function. For example, the OCR function may include a function of identifying one or more characters from at least a portion of an image and converting into a text. For example, the OCR function may include an operation of converting at least one characters identified in an image into binary data. The OCR function may include a function of obtaining a text based on the at least one characters converted into the binary data. The processor 120 may display a second visual object including the one or more characters in association with the first visual object based on the one or more characters. According to an embodiment, the electronic device 101 may obtain a text by segmenting the one or more characters included in the first visual object. A description of an operation of displaying the second visual object will be described later in FIGS. 4A and/or 4B.

According to an embodiment, the processor 120 may receive a second input indicating to change a size of the first visual object overlapped on the image. For example, the second input may include an input for the second visual object displayed together with the first visual object. For example, the second visual object may include a visual object for displaying one or more characters identified in the first visual object. For example, the second input may include an input of dragging the second visual object. The processor 120 may identify the first visual object having a size changed based on the second input. The processor 120 may display the first visual object having the changed size overlappingly on a portion of the image. The processor 120 may change the one or more characters included in the second visual object based on the portion of the image overlapped by the first visual object having the changed size. The processor 120 according to an embodiment may display the second visual object overlappingly on the first visual object. The second visual object displayed overlappingly may include a visual object for identifying the one or more characters included in the first visual object and indicating them as a text. In case that the second visual object is displayed overlappingly by the first visual object, the second visual object may be displayed in substantially the same area as the first visual object.

The processor 120 of the electronic device 101 according to an embodiment may display, in the second visual object displayed in the display 210, a first text included in the first visual object. The first text may include the one or more characters identified in the first visual object. The processor 120 may display, in the second visual object, a second text included in another portion connected to a portion of the image overlapped by the first visual object.

The processor 120 of the electronic device 101 according to an embodiment may display the first text in the second visual object based on a first preset color. The processor 120 may display the first text in the first preset color. The processor 120 may display the second text different from the first text in a second preset color. The second text may include a portion of one or more characters connected to the one or more characters identified in the first visual object.

As described above, according to an embodiment, the electronic device 101 may display the first visual object based on an input indicating to select the text in the image. The electronic device 101 may display the second visual object based on the first visual object. In the second visual object, by identifying the one or more characters included in the first visual object, the electronic device 101 may display the identified characters as a text. The electronic device 101 may enhance a user experience of the electronic device 101 by displaying the text on the second visual object.

FIG. 4A is an example of a screen of an electronic device displaying a text included in an image, according to an embodiment. FIG. 4B is an example of a screen of an electronic device displaying a text included in an image, according to an embodiment. An electronic device 101 of FIGS. 4A and/or 4B may be an example of the electronic device 101 of FIGS. 1, 2, and/or 3. A display 210 of FIGS. 4A and/or 4B may be an example of the display 210 of FIGS. 2 and/or 3. Operations of FIGS. 4A and/or 4B may be executed by the processor 120 of FIGS. 1 and/or 3.

Referring to FIG. 4A and/or FIG. 4B, according to an embodiment, the electronic device 101 may display an image in the display 210. For example, the electronic device 101 may receive a first input indicating to select a text in the image while displaying the image. The electronic device 101 may display a first visual object 220 overlappingly on a portion of the image selected by the first input based on receiving the first input. The electronic device 101 may display a second visual object 420 in association with the first visual object 220 based on one or more characters included in the portion of the image overlapped by the first visual object 220. For example, the second visual object 420 may include a menu 420-1 for executing a function (e.g., share, search, select all, translation, or copy). For example, the menu 420-1 may be configured with buttons for receiving an input. For example, the menu 420-1 may be displayed together with an icon for indicating the function. For example, based on an input for at least one of the menu 420-1, the electronic device 101 may execute a function matching the input for a text included in the first visual object 220. For example, the electronic device 101 may execute a function for transmitting a text matching the first visual object 220 to an external electronic device based on an input for a 'sharing' button among the menu 420-1. For example, the electronic device 101 may perform a searching function for the text matching the first visual object 220 based on an application different from an application displaying an image based on an input for the 'searching' button among the menu 420-1. The searching function may be executed based on at least a portion of an Internet application and/or an application included in the electronic device 101.

For example, the second visual object 420 may include a third visual object 420-2 for indicating a text obtained based on the one or more characters. Referring to FIG. 4, the electronic device 101 may display a text such as 'nice to' included in the first visual object 220 in the third visual object 420-2. For example, the electronic device 101 may display the menu 420-1 and the third visual object 420-2 together based on the first visual object 220. An operation of displaying the menu 420-1 and the third visual object 420-2 together is an example, and is not limited thereto.

According to an embodiment, the electronic device 101 may display a first text obtained from the first visual object 220 and a second text included in another portion 410 connected to the portion of the image overlapped by the first visual object 220. Referring to FIG. 4, while displaying 'nice to', which is the first text obtained from the first visual object 220, the electronic device 101 may display 'meet you. How are you? I'm fine thank you.', which is the second text obtained from the other portion 410 connected to the first visual object 220, together in the second visual object 420. For example, the electronic device 101 may display at least a portion of the second text obtained from the other portion 410 in the second visual object 420. For example, the electronic device 101 may display 'meet you.', which is at least a portion obtained from the other portion 410, together with 'nice to', which is the first text. An operation of displaying the menu 420-1 and the third visual object 420-2 together is an example, and is not limited thereto.

According to an embodiment, the electronic device 101 may display the first visual object 220 on a portion of the image selected by the first input based on the first input indicating to select the text in the image. While displaying the first visual object 220, the electronic device 101 may display the second visual object 420 for displaying the one or more characters included in the first visual object 220. The electronic device 101 may display the second visual object 420 in an area different from an area in which the image is displayed.

The electronic device 101 according to an embodiment may display the first text based on a first preset color in the second visual object 420. For example, the first text may include a text obtained based on an input indicating to select the one or more characters included in the image. For example, the first text may include texts matching the first visual object 220. While displaying the first text based on the first preset color, the electronic device 101 may display the second text based on a second preset color different from the first preset color. The second text may include a text obtained from the other portion 410. As described above, the electronic device 101 according to an embodiment may enhance a user experience of the electronic device 101 by displaying the first text in the first preset color and displaying the second text in the second preset color.

Referring to FIG. 4B, the electronic device 101 according to an embodiment may display a text 430 obtained based on the one or more characters included in the image. The electronic device 101 may display the text 430 obtained from the one or more characters overlappingly on the one or more characters in an area 440 including the one or more characters. The electronic device 101 may receive an input indicating to select a text in the area 440. The electronic device 101 may highlight and display at least a portion of the text 430 to indicate the input based on the input. For example, the electronic device 101 may display a text matching the input in a preset color. For example, the electronic device 101 may distinguish and display an area displaying the text matching the input in a color different from the color of the text. For example, the electronic device 101 may shade and display a text. For example, the electronic device 101 may display the text matching the input in bold. For example, the electronic device 101 may display the text matching the input in italic. As described above, according to an embodiment, the electronic device 101 may enhance the user experience of the electronic device 101 by displaying the selected text based on the preset color. The electronic device 101 may enhance the user experience of the electronic device 101 by displaying the text in bold. The electronic device 101 may enhance the user experience of the electronic device 101 by displaying the text in italic.

According to an embodiment, while identifying one or more characters included in the area 440, the electronic device 101 may display at least a portion of a text matching the one or more characters through the display 210. For example, the electronic device 101 may change the display of at least a portion of the text 430 based on selection of at least a portion of the one or more characters included in the first visual object 220. For example, the electronic device 101 may shade and display the text 430 based on the selection of at least a portion of the one or more characters included in the first visual object 220. For example, the electronic device 101 may display the text 430 in italic based on the selection of at least a portion of the one or more characters included in the first visual object 220. For example, the electronic device 101 may display the text 430 in bold based on the selection of at least a portion of the one or more characters included in the first visual object 220.

The electronic device 101 according to an embodiment may identify lines included in the area 440. The lines may include one or more characters. The electronic device 101 may receive an input indicating to select one of the lines. The electronic device 101 may display a text matching the one or more characters included in the line in which the input is received based on the input.

Referring to FIGS. 4A to 4B, according to an embodiment, the electronic device 101 may receive an input from the display 210 displaying an image while displaying the second visual object 420 displaying a text obtained based on a portion of the image and/or the text 430. For example, the electronic device may cease displaying the second visual object 420 and/or the text 430 based on receiving the input. For example, the input may include a gesture of tapping the display 210.

For example, the input may include an input of dragging the second visual object 420 and/or the text 430 in a first preset direction. The electronic device may cease displaying the second visual object 420 and/or the text 430 based on the input of dragging in the first preset direction. The electronic device may receive an input of dragging in a second preset direction different from the first preset direction. The electronic device may display the second visual object 420 and/or the text 430 based on the input of dragging in the second preset direction. As described above, according to an embodiment, the electronic device 101 may enhance the user experience of the electronic device 101 by displaying the second visual object 420 and/or the text 430.

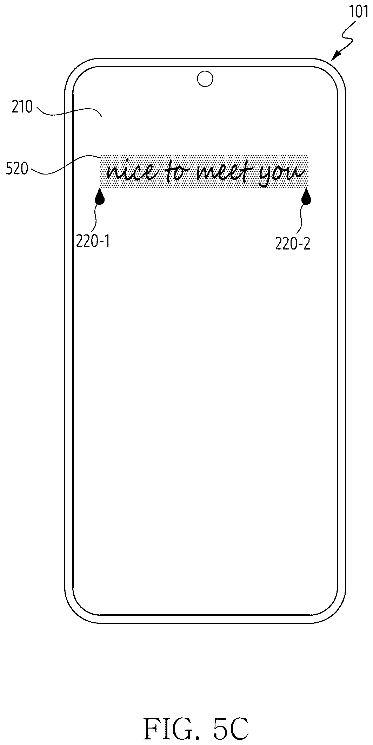

FIG. 5A is an example of a screen of an electronic device for obtaining a text included in an image, according to an embodiment. FIG. 5B is an example of a screen of an electronic device for obtaining a text included in an image, according to an embodiment. FIG. 5C is an example of a screen of an electronic device for obtaining a text included in an image, according to an embodiment. An electronic device 101 of FIGS. 5A, 5B, and/or 5C may be an example of the electronic device 101 of FIGS. 1, 2, 3, 4A, and/or 4B. A display 210 of FIGS. 5A, 5B, and/or 5C may be an example of the display 210 of FIGS. 2, 3, 4A, and/or 4B. Operations of FIGS. 5A, 5B, and/or 5C may be executed by the processor 120 of FIGS. 1 and/or 3.

Referring to FIGS. 5A, 5B, and/or 5C, according to an embodiment, the electronic device 101 may display an image in the display 210. The electronic device 101 may receive a first input indicating to select a text in the image. The electronic device 101 may display a first visual object 220 on a portion of the image selected by the first input. While displaying the first visual object 220, the electronic device 101 may display second visual objects 220-1 and 220-2 different from the first visual object 220 for displaying an area in which the first visual object 220 is selected.

According to an embodiment, the electronic device 101 may receive a second input 510 indicating to change a size of the first visual object 220. For example, the second input 510 may include an input of dragging an end of the first visual object 220. For example, the second input 510 may include an input of dragging at least one of the second visual objects 220-1 and 220-2. The electronic device 101 may display a first visual object 520 having the changed size based on the second input 510 in the display 210. For example, referring to FIG. 5B, the electronic device 101 may display the first visual object 220 having the size during the change while the size of the first visual object 220 is changed based on the second input 510.

Referring to FIGS. 5A to 5C, according to an embodiment, the electronic device 101 may display a first text obtained from the first visual object 220 in the display 210 while displaying the first visual object 220. The electronic device 101 may receive the second input 510 indicating to change the size of the first visual object 220 while displaying the text obtained from the first visual object 220. The electronic device 101 may display a text matching the first visual object 520 having the size changed based on the second input 510 in the display 210. For example, the text may be displayed based on a visual object different from the first visual object 220, the second visual objects 220-1 and 220-2, and/or the first visual object 520 having the changed size. The text may be displayed by the electronic device 101 overlappingly on the first visual object 220 and/or the first visual object 520 having the changed size.

As described above, according to an embodiment, the electronic device 101 may display the first visual object 220 and/or the second visual objects 220-1 and 220-2 based on the first input indicating to select the text. While displaying the first visual object 220, the electronic device 101 may display the text matching the first visual object. The electronic device 101 may receive the second input 510 for adjusting the size of the first visual object 220. The electronic device 101 may display the first visual object 520 having the changed size based on receiving the second input 510. Based on changing the display from the first visual object 220 to the first visual object 520 having the changed size, the electronic device 101 may change and display the text matching the first visual object 220 to the text matching the first visual object 520 having the changed size. The electronic device 101 may enhance a user experience of the electronic device 101 by changing and displaying the text matching the first visual object 520 having the changed size.

FIG. 6 is an example of an operation of an electronic device that segments a text by using distribution information obtained from an image, according to an embodiment. The electronic device of FIG. 6 may be an example of the electronic device 101 of FIGS. 1, 2, 3, 4A, 4B, 5A, 5B, and/or 5C. Operations of FIG. 6 may be executed by the processor 120 of FIGS. 1 and/or 3.

Referring to FIG. 6, the electronic device according to an embodiment may display an image in a display (e.g., the display 210 of FIGS. 2, 3, 4A, 4B, 5A, 5B, and/or 5C). While displaying the image, based on an input indicating to select a text in the image, the electronic device may obtain an image of a portion matching the input. The electronic device may obtain a text matching one or more characters included in the image by identifying the image.

The electronic device according to an embodiment may identify a portion 610 in an image matching a first input based on the first input. For example, the electronic device may display a first visual object matching the portion 610 in the image selected based on the first input. The electronic device may obtain, in the portion 610 selected by the first input, distribution information including a distribution of a third visual object of the image representing the one or more characters in the portion 610. For example, the third visual object may be related to strokes of the one or more characters included in the portion of the image. For example, the third visual object may be related to one or more strokes representing the one or more characters. For example, the distribution information including the distribution of the third visual object may include a histogram obtained from the portion 610 of the image. For example, the histogram may be obtained based on pixels that may be identified with the one or more characters in the image. The electronic device may obtain a cumulative histogram of the histogram based on obtaining the histogram based on the pixels. The cumulative histogram may be a histogram obtained by adding values obtained from a start point of the histogram. The electronic device may obtain a normalized average histogram based on obtaining the cumulative histogram. As described above, by obtaining the normalized average histogram based on the cumulative histogram, the electronic device 101 according to an embodiment may obtain the normalized average histogram faster than in case that the cumulative histogram is not used. The average histogram may be a histogram for an average value of a histogram in a window 640 having a preset width w. The normalized average histogram may be a histogram obtained by normalizing the average histogram. For example, the normalized average histogram may be a histogram in which a frequency value is normalized to a value between 0 to 1 based on a maximum value in the average histogram. Frequency values displayed in the normalized average histogram may be matched to strokes for configuring one or more characters in a position where each of the frequency values is displayed.

According to an embodiment, the electronic device may display the first visual object based on the input indicating to select the text in the image. The electronic device may obtain the text included in the first visual object. For example, the electronic device may obtain a histogram (e.g., the normalized average histogram) obtained from the portion 610 of the image. The electronic device may segment one or more characters included in the first visual object based on the histogram obtained from the first visual object. The electronic device may identify a segment intensity for segmenting the one or more characters based on the histogram. For example, the electronic device may identify the segment intensity based on a frequency value identified in the histogram. For example, the electronic device may identify that a strength of the segment intensity is high based on the frequency value being identified as being less than a preset size. For example, the electronic device may identify that the strength of the segment intensity is low based on the frequency value being identified as being greater than or equal to the preset size.

According to an embodiment, the electronic device may obtain the distribution information by applying the window 640 with a preset size to the portion 610 of the image. The window with the preset size may have a width different from a width of the window 640 with the preset width w. For example, the window 640 with the preset size may have the width w approximately 0.3 times a height h of the portion 610 of the image. For example, the electronic device may slide and move the window 640 with the preset size from an end of the histogram including the distribution information to another end. The electronic device may obtain candidate positions 630 for segmenting one or more characters from the distribution information based on the window 640 with the preset size that is slid and moved. For example, the electronic device may obtain local minimum values indicated in the window 640 with the preset size based on the window 640 with the preset size that slides and moves, from the distribution information. For example, m1 to m13 of FIG. 6 may match each of the local minimum values obtained while the window 640 with the preset size slides and moves. The electronic device may identify the candidate positions 630 of a border line between one or more characters based on the local minimum values. The candidate positions may be obtained based on the segment intensity.

The electronic device according to an embodiment may apply a cost function to a combination of the candidate positions 630. For example, the electronic device may obtain a result value of the cost function matching each of cases indicating the combination of the candidate positions 630. For example, the cost function may be Equation 1 below.

【Equation 1】

$$cost = w^{length} * cost^{length} + w^{histogram} * cost^{histogram}$$

Referring to the Equation 1, the $w^{length}$ may mean a weight for a width. The weight may be differently preset based on a type of a text. For example, a weight of a text having a Korean type may be preset as 1.0. For example, a weight of a text having an alphabetic lowercase type may be preset as 0.5. For example, a weight of a text that is alphabetic and has a relatively wide type may be preset as 0.8. For example, the text that is alphabetic and has the relatively wide type may be referred to as an alphabetic lowercase 'w' and/or an alphabetic lowercase 'm'. For example, a weight of a text that is alphabetic and has a relatively narrow type may be preset as 0.1. The text that is alphabetic and has the relatively narrow type may be referred to as an alphabetic capital 'I' and/or an alphabetic lowercase 'l'. However, it is not limited thereto. The weight may be obtained based on a font of the portion 610 of the image obtained based on the first input. The weight may be obtained by using the font. The electronic device may obtain the weight based on at least one of information included in the font. For example, the electronic device may obtain the weight based on width information of the font included in the font. For example, the information included in the font may include the width information of the font and/or position information of a letter of characters of the font.

In the Equation 1, the $cost^{length}$ may be Equation 2 below.

【Equation 2】

$$cost^{length} = \sum_{i}^{|S|} \left(S_i^{expected} - S_i^{current}\right)^2 + \sum_{j}^{|G|} \left(G_j^{expected} - G_j^{current}\right)^2$$

Referring to the Equation 2, the $cost^{length}$ may be the result value of the cost function for obtaining the candidate positions 630. The electronic device may identify a case having the smallest result value of the $cost^{length}$. The electronic device may segment one or more characters matched to the case based on identifying the case having the smallest result value of the $cost^{length}$.

Referring to the Equation 2, in the Equation 2, the $S_i$ may indicate a i-th segment width. The $|S|$ may indicate the number of positions that may be segmented. The $G_j$ may indicate a length of a j-th blank area. The $|G|$ may indicate the number of blank areas. The $|G|$ may substantially mean $|S|$ - 1.

The $cost^{histogram}$ included in the Equation 1 may be Equation 3 below.

【Equation 3】

$$cost^{histogram} = \sum_{j}^{|G|} histogram[X_j]^2 \Big/ |G|$$

According to an embodiment, the electronic device may identify a segment intensity cost of the portion 610 of the image by applying the Equation 3. The of the Equation 3 may mean coordinates matching the j-th candidate position. For example, the segment intensity cost may indicate the strength of the segment intensity in a position or an area where one or more characters should be segmented. For example, while identifying the distribution information, the electronic device may identify that the strength of the segment intensity is strong based on identifying a stroke of one or more characters identified in the distribution information.

According to an embodiment, the electronic device may identify an expected size of a letter area. For example, the expected size of the letter area may mean a size of each of one or more characters. The electronic device may identify a size of a separation area. For example, the size of the separation area may mean a size of an area including a point for segmenting one or more characters to convert them into a text.

For example, in FIG. 6, an example of applying the equations is described. For example, the electronic device may obtain the candidate positions 630 based on distribution information 620 obtained from the portion 610 of the image of FIG. 6. For example, the candidate positions may be obtained based on the local minimum values (e.g., m1 to m14) identified in the distribution information 620. For example, each of the candidate positions may be matched to each of the local minimum values m1 to m14 identified in the distribution information 620. The electronic device may identify eight characters and/or one blank area from the portion 610 of the image. The electronic device may apply a weight of 0.5 to each of the eight characters. The electronic device may apply a weight of 1.0 to the one blank area. For example, the electronic device may identify a case in which 'fo' and 'nt that' are segmented in the portion 610 of the image. For example, the case may be an example of segmenting between a word and a word. For example, in the case, the electronic device may identify an expected width of 'fo' and 'nt that' with the same width. For example, the expected width may be referred to as the

$$S_i^{expected}$$

of the Equation 2. For example, the electronic device may identify an expected width corresponding to each of 'fo' and 'nt that'. For example, the electronic device may identify 0.4, which is an expected width corresponding to 'fo'. For example, the electronic device may identify 0.4, which is an expected width corresponding to 'nt that'. The electronic device may identify a current width of 'fo'. The electronic device may identify a current width of 'nt that'. For example, the current

$$S_i^{current}$$

width may be referred to as the of the Equation 2. For example, the electronic device may identify 0.2, which is the current width of 'fo'. For example, the electronic device may identify 0.8, which is the current width of 'nt that'. The electronic device may apply a cost function based on obtaining the expected widths and the current widths. The case may be an example of segmenting a word and a word, and an example of segmenting into 'font' and 'that' identified in a case different from the case may be the most preferable example. The electronic device may obtain the $cost^{length}$ by applying a segment function in the case. The electronic device may obtain a result value of the $cost^{length}$ as $\{(0.4-0.2)^2+(0.4-0.8)^2\} + \{(0.2-0.0)^2\} = 0.24$ in the case. A result value obtained by applying a cost function in the case may be a value relatively larger than a result value of a cost function obtained from the case segmented into 'font' and 'that'. For example, an equation for obtaining the $cost^{length}$ may be referred to as the Equation 2. For example, the electronic device may obtain the $cost^{histogram}$ in the case. For example, the electronic device may apply the Equation 3 based on a local minimum value m3 of FIG. 6 being identified as 0.3. The electronic device may obtain

$$cost^{histogram} = \frac{histogram[X_j]^2}{1} = 0.09$$

by applying the Equation 3.

As described above, the electronic device according to an embodiment may obtain text by segmenting one or more characters based on distribution information. By segmenting the one or more characters based on the distribution information, the electronic device may segment the one or more characters relatively accurately compared to the case in which the one or more characters are not segmented through the distribution information.

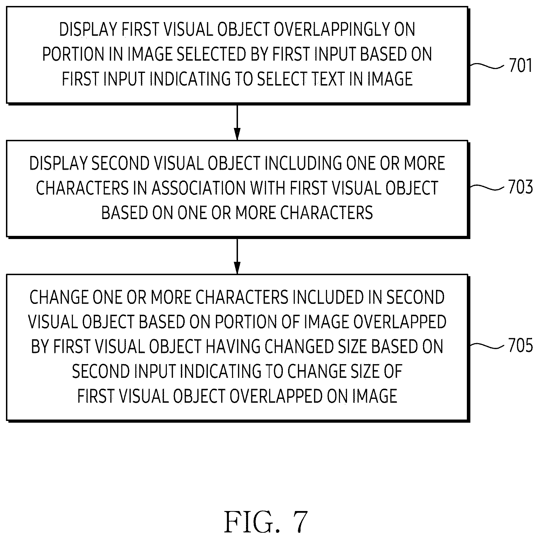

FIG. 7 is an example of a flowchart of an operation of an electronic device according to an embodiment. The electronic device of FIG. 7 may be an example of the electronic device 101 of FIGS. 1, 2, 3, 4A, 4B, 5A, 5B, and/or 5C, and/or the electronic device of FIG. 6. Operations of FIG. 7 may be executed by the processor 120 of FIGS. 1 and/or 3.

Referring to FIG. 7, in an operation 701, the electronic device according to an embodiment may display an image in a display. The electronic device may identify a first input indicating to select a text in the image displayed in the display. The electronic device may display a first visual object overlappingly on a portion in the image selected by the first input based on the first input. For example, the first visual object may be referred to as an area for identifying one or more characters included in the image. For example, the first visual object may be generated based on the first input of a user.

In an operation 703, the electronic device according to an embodiment may display a second visual object including the one or more characters in association with the first visual object based on the one or more characters. The electronic device may display a text obtained from the first visual object in the second visual object. The text may be obtained based on the one or more characters. The electronic device may segment the one or more characters to obtain the text. In a portion selected by the first input, the electronic device may obtain distribution information including a distribution of a third visual object of the image representing the one or more characters in the portion. The third visual object may be related to strokes of the one or more characters included in the first visual object.

According to an embodiment, the electronic device may obtain the distribution information by applying a window with a preset size to a portion of the image. For example, the distribution information may be related to the histogram described in FIG. 6. The electronic device may identify one or more local minimum values included in the distribution information. For example, the electronic device may obtain the distribution information based on a window having the preset size. The electronic device may identify candidate positions of a border line between the one or more characters, based on the one or more local minimum values. The electronic device may obtain the text based on the one or more characters based on identifying the candidate positions. The electronic device may display the obtained text in the second visual object.

In an operation 705, according to an embodiment, the electronic device may identify a second input indicating to change a size of the first visual object overlapped on the image. For example, the electronic device may change the display of the first visual object based on the change in the size of the first visual object. For example, the first visual object may have the size changed based on the second input. The electronic device may change the display of one or more texts corresponding to one or more characters included in the second visual object based on a portion of the image overlapped by the first visual object having the changed size, based on the second input. The electronic device may change the display of the one or more texts corresponding to the one or more characters included in the second visual object based on the portion of the image overlapped by the first visual object having the changed size based on the second input indicating to change the size of the first visual object overlapped on the image. For example, while the size of the first visual object is changed, the electronic device may display the one or more characters included in the first visual object and characters distinct from the one or more characters connected to the first visual object in the second visual object.

According to an embodiment, the electronic device may change an attribute of the one or more characters included in the second visual object based on the second input. For example, the electronic device may change an attribute (or a characteristic) of the text displayed in the second visual object. For example, the electronic device may display the text in bold. For example, the electronic device may shade and display the text. The electronic device may display the text in italic.

According to an embodiment, when the one or more characters included in the first visual object are incorrectly identified, the electronic device may display a text displayed in the second visual object based on the incorrect identification. For example, based on misrecognizing the one or more characters included in the first visual object, the electronic device may display a text matching the misrecognized characters in the second visual object. The electronic device may display the text corresponding to the misrecognized characters in the second visual object.

As described above, the electronic device according to an embodiment may enhance a user experience of the electronic device by changing the one or more characters included in the second visual object based on the second input.

As described above, according to an embodiment, an electronic device (e.g., the electronic device 101 of FIGS. 1, 2, 3, 4A, 4B, 5A, and/or 5B) may comprise a display (e.g., the display 210 of FIGS. 2, 3, 4A, 4B, 5A, and/or 5B) and a processor (e.g., the processor 120 of FIGS. 1 and/or 3). The processor may be configured to display an image in the display. The processor may be configured to display, based on a first input indicating to select a text in the image, a first visual object (e.g., the first visual object 220 of FIGS. 2, 4A, 4B, and/or 5A) overlappingly on a portion in the image selected by the first input. The processor may be configured to display, based on one or more characters included in the portion of the image overlapped by the first visual object, a second visual object (e.g., the second visual object 420 of FIG. 4A) including the one or more characters in association with the first visual object. The processor may be configured to change, based on the portion of the image overlapped by the first visual object having a size changed based on a second input (e.g., the second input 510 of FIG. 5A) indicating to change the size of the first visual object overlapped on the image, the one or more characters included in the second visual object.

According to an embodiment, the processor may be configured to display, in a second visual object displayed in the display, a first text included in the first visual object, and a second text included in another portion (e.g., the other portion 410 of FIG. 4A) connected to the portion of the image overlapped by the first visual object.

According to an embodiment, the processor may be configured to display, in the second visual object, the first text based on a first preset color. The processor may be configured to display the second text based on a second preset color different from the first preset color. For example, the processor may be configured to display, in the second visual object, the first text based on the first preset color, and display the second text based on the second preset color different from the first preset color.

According to an embodiment, the processor may be configured to display the second visual object overlapped on the first visual object.

According to an embodiment, the processor may be configured to obtain, in the portion of the image selected by the first input, distribution information (e.g., the distribution information 620 of FIG. 6) including a distribution of a third visual object of the image representing the one or more characters in the portion.

According to an embodiment, the processor may be configured to obtain the distribution information by applying a window (e.g., the window 640 of FIG. 6) of a preset size to the portion.

According to an embodiment, the processor may be configured to identify, based on one or more local minimum values included in the distribution information, candidate positions (e.g., the candidate positions 630 of FIG. 6) of a border line between the one or more characters.

According to an embodiment, the processor may be configured to determine a position of a border line between the one or more characters by applying a cost function to a combination of the candidate positions. The processor may be configured to display, based on the position of the border line, the first visual object.

As described above, according to an embodiment, a method of an electronic device (e.g., the electronic device 101 of FIGS. 1, 2, 3, 4A, 4B, 5A, and/or 5B) may comprise displaying an image in a display (e.g., the display 210 of FIGS. 2, 3, 4A, 4B, 5A, and/or 5B). The method of the electronic device may comprise displaying, based on a first input indicating to select a text in the image, a first visual object (e.g., the first visual object 220 of FIGS. 2, 4A, 4B, and/or 5A) overlappingly on a portion in the image selected by the first input. The method of the electronic device may comprise displaying, based on one or more characters included in the portion of the image overlapped by the first visual object, a second visual object (e.g., the second visual object 420 of FIG. 4A) including the one or more characters in association with the first visual object. The method of the electronic device may comprise changing, based on the portion of the image overlapped by the first visual object having a size changed based on a second input (e.g., the second input 510 of FIG. 5A) indicating to change the size of the first visual object overlapped on the image, the one or more characters included in the second visual object.

According to an embodiment, the method of the electronic device may comprise displaying, in the second visual object displayed in the display, a first text included in the first visual object, and a second text included in another portion (e.g., the other portion 410 of FIG. 4A) connected to the portion of the image overlapped by the first visual object.

According to an embodiment, the method of the electronic device may comprise displaying, in the second visual object, the first text based on a first preset color. The method of the electronic device may comprise displaying the second text based on a second preset color different from the first preset color. The method of the electronic device may comprise displaying, in the second visual object, the first text based on the first preset color, and displaying the second text based on the second preset color different from the first preset color.

According to an embodiment, the method of the electronic device may comprise displaying the second visual object overlapped on the first visual object.

According to an embodiment, the method of the electronic device may comprise obtaining, in the portion selected by the first input, distribution information (e.g., the distribution information 620 of FIG. 6) including a distribution of a third visual object of the image representing the one or more characters in the portion.

According to an embodiment, the method of the electronic device may comprise applying a window (e.g., the window 640 of FIG. 6) of a preset size to the portion. The method of the electronic device may comprise obtaining the distribution information by applying the window of the preset size to the portion.

According to an embodiment, the method of the electronic device may comprise identifying one or more local minimum values included in the distribution information. The method of the electronic device may comprise identifying, based on one or more local minimum values included in the distribution information, candidate positions (e.g., the candidate positions 630 of FIG. 6) of a border line between the one or more characters.

According to an embodiment, the method of the electronic device may comprise applying a cost function to a combination of the candidate positions. The method of the electronic device may comprise determining a position of a border line between the one or more characters. The method of the electronic device may comprise determining the position of the border line between the one or more characters by applying the cost function to the combination of the candidate positions. The method of the electronic device may comprise displaying, based on the position of the border line, the first visual object.

As described above, according to an embodiment, a computer readable storage medium storing one or more programs, wherein the one or more programs, when executed by a processor (e.g., the processor 120 of FIGS. 1 and/or 3) of an electronic device (e.g., the electronic device 101 of FIGS. 1, 2, 3, 4A, 4B, 5A, and/or 5B), may cause the processor of the electronic device to display an image in a display (e.g., the display 210 of FIGS. 2, 3, 4A, 4B, 5A, and/or 5B). The one or more programs, when executed by the processor of the electronic device, may cause the processor of the electronic device to display, based on a first input indicating to select a text in the image, a first visual object (e.g., the first visual object 220 of FIGS. 2, 4A, 4B, and/or 5A) overlappingly on a portion in the image selected by the first input. The one or more programs, when executed by the processor of the electronic device, may cause the processor of the electronic device to display, based on one or more characters included in the portion of the image overlapped by the first visual object, a second visual object (e.g., the second visual object 420 of FIG. 4A) including the one or more characters in association with the first visual object. The one or more programs, when executed by the processor of the electronic device, may cause the processor of the electronic device to change, based on the portion of the image overlapped by the first visual object having a size changed based on a second input indicating to change the size of the first visual object overlapped on the image, the one or more characters included in the second visual object.

According to an embodiment, the one or more programs, when executed by the processor of the electronic device, may cause the processor of the electronic device to display, in the second visual object displayed in the display, a first text included in the first visual object, and a second text included in another portion (e.g., the other portion 410 of FIG. 4A) connected to the portion of the image overlapped by the first visual object.

According to an embodiment, the one or more programs, when executed by the processor of the electronic device, may cause the processor of the electronic device to display, in the second visual object, the first text based on a first preset color, and display the second text based on a second preset color different from the first preset color.

According to an embodiment, the one or more programs, when executed by the processor of the electronic device, may cause the processor of the electronic device to display the second visual object overlapped on the first visual object.

According to an embodiment, the one or more programs, when executed by the processor of the electronic device, may cause the processor of the electronic device to obtain, in the portion selected by the first input, distribution information (e.g., the distribution information 620 of FIG. 6) including a distribution of a third visual object of the image representing the one or more characters in the portion.

According to an embodiment, the one or more programs, when executed by the processor of the electronic device, may cause the processor of the electronic device to obtain the distribution information by applying a window (e.g., the window 640 of FIG. 6) of a preset size to the portion.

According to an embodiment, the one or more programs may cause the processor of the electronic device to identify, based on one or more local minimum values included in the distribution information, candidate positions (e.g., the candidate positions 630 of FIG. 6) of a border line between the one or more characters.

According to an embodiment, the one or more programs, when executed by the processor, may cause the processor of the electronic device to determine a position of a border line between the one or more characters by applying a cost function to a combination of the candidate positions. The one or more programs, when executed by the processor of the electronic device, may cause the processor of the electronic device to display, based on the position of the border line, the first visual object.

According to an embodiment, the one or more programs, when executed by the processor 120, may cause the processor 120 of the electronic device 101 to display, based on misrecognizing the one or more characters included in the first visual object 220, a text corresponding to one or more misrecognized characters in the second visual object 420.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.  An electronic device comprising,

    a display; and
    a processor, wherein the processor is configured to,
    display an image in the display;
    display, based on a first input indicating to select a text in the image, a first visual object overlappingly on a portion in the image selected by the first input;
    display, based on one or more characters included in the portion of the image overlapped by the first visual object, a second visual object including the one or more characters in association with the first visual object; and
    change, based on the portion of the image overlapped by the first visual object having a size changed based on a second input indicating to change the size of the first visual object overlapped on the image, the one or more characters included in the second visual object.

2.  The electronic device of claim 1, wherein the processor is configured to,

display, in a second visual object displayed in the display, a first text included in the first visual object, and a second text included in another portion connected to the portion of the image overlapped by the first visual object.

3. The electronic device of claim 2, wherein the processor is configured to,
display, in the second visual object, the first text based on a first preset color, and display the second text based on a second preset color different from the first preset color.

4. The electronic device of claim 1, wherein the processor is configured to,
display the second visual object overlapped on the first visual object.

5. The electronic device of claim 1, wherein the processor is configured to,
obtain, in the portion selected by the first input, distribution information including a distribution of a third visual object of the image representing the one or more characters in the portion.

6. The electronic device of claim 5, wherein the processor is configured to, obtain the distribution information by applying a window of a preset size to the portion.

7. The electronic device of claim 5, wherein the processor is configured to,
identify, based on one or more local minimum values included in the distribution information, candidate positions of a border line between the one or more characters.

8. The electronic device of claim 7, wherein the processor is configured to,

determine a position of a border line between the one or more characters by applying a cost function to a combination of the candidate positions; and
display, based on the position of the border line, the first visual object.

9. A method of an electronic device comprising:

displaying an image in a display;
displaying, based on a first input indicating to select a text in the image, a first visual object overlappingly on a portion in the image selected by the first input;
displaying, based on one or more characters included in the portion of the image overlapped by the first visual object, a second visual object including the one or more characters in association with the first visual object; and
changing, based on the portion of the image overlapped by the first visual object having a size changed based on a second input indicating to change the size of the first visual object overlapped on the image, the one or more characters included in the second visual object.

10. The method of claim 9, comprising,
displaying, in the second visual object displayed in the display, a first text included in the first visual object, and a second text included in another portion connected to the portion of the image overlapped by the first visual object.

11. The method of claim 10, comprising,
displaying, in the second visual object, the first text based on a first preset color, and displaying the second text based on a second preset color different from the first preset color.

12. The method of claim 9, comprising,
displaying the second visual object overlapped on the first visual object.

13. The method of claim 9, comprising,
obtaining, in the portion selected by the first input, distribution information including a distribution of a third visual object of the image representing the one or more characters in the portion.

14. The method of claim 13, comprising,
obtaining the distribution information by applying a window of a preset size to the portion.

15. The method of claim 13, comprising,
identifying, based on one or more local minimum values included in the distribution information, candidate positions of a border line between the one or more characters.

100

ELECTRONIC DEVICE 101

INPUT MODULE 150

SOUND OUTPUT MODULE 155

DISPLAY MODULE 160

MEMORY 130

VOLATILE MEMORY 132

NON-VOLATILE MEMORY 134

INTERNAL MEMORY 136

EXTERNAL MEMORY 138

BATTERY 189

PROCESSOR 120

MAIN PROCESSOR 121

AUXILIARY PROCESSOR 123

COMMUNICATION MODULE 190

WIRELESS COMMUNICATION MODULE 192

WIRED COMMUNICATION MODULE 194

POWER MANAGE-MENT MODULE 188

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTING TERMINAL 178

PROGRAM 140

APPLICATION 146

MIDDLEWARE 144

OPERATING SYSTEM 142

SECOND NETWORK 199

ELECTRONIC DEVICE 104

FIRST NETWORK 198

ELECTRONIC DEVICE 102

SERVER 108

FIG. 1

19

FIG. 2

310

ELECTRONIC DEVICE (101)

| PROCESSOR (120) | ←→ | DISPLAY (210) |

FIG. 3

FIG. 4A

FIG. 4B

FIG. 5A

FIG. 5B

FIG. 5C

FIG. 6

```
┌─────────────────────────────────────────────────┐
│  DISPLAY FIRST VISUAL OBJECT OVERLAPPINGLY ON    │
│  PORTION IN IMAGE SELECTED BY FIRST INPUT BASED ON│──── 701
│  FIRST INPUT INDICATING TO SELECT TEXT IN IMAGE  │
└─────────────────────────────────────────────────┘
                        │
                        ▼
┌─────────────────────────────────────────────────┐
│  DISPLAY SECOND VISUAL OBJECT INCLUDING ONE OR MORE│
│  CHARACTERS IN ASSOCIATION WITH FIRST VISUAL OBJECT│──── 703
│  BASED ON ONE OR MORE CHARACTERS                 │
└─────────────────────────────────────────────────┘
                        │
                        ▼
┌─────────────────────────────────────────────────┐
│  CHANGE ONE OR MORE CHARACTERS INCLUDED IN SECOND │
│  VISUAL OBJECT BASED ON PORTION OF IMAGE OVERLAPPED│
│  BY FIRST VISUAL OBJECT HAVING CHANGED SIZE BASED ON│──── 705
│  SECOND INPUT INDICATING TO CHANGE SIZE OF       │
│  FIRST VISUAL OBJECT OVERLAPPED ON IMAGE         │
└─────────────────────────────────────────────────┘
```

FIG. 7

## INTERNATIONAL SEARCH REPORT

| International application No. |
|---|
| **PCT/KR2023/012361** |

### A. CLASSIFICATION OF SUBJECT MATTER

**G06F 3/04842**(2022.01)i; **G06F 3/04845**(2022.01)i; **G06F 3/0481**(2013.01)i; **G06V 30/32**(2022.01)i; **G06V 30/148**(2022.01)i

According to International Patent Classification (IPC) or to both national classification and IPC

### B. FIELDS SEARCHED

Minimum documentation searched (classification system followed by classification symbols)

G06F 3/04842(2022.01); G06F 3/023(2006.01); G06F 3/041(2006.01); G06F 3/0488(2013.01); G06K 9/00(2006.01); G06N 20/00(2019.01); G06V 10/10(2022.01); H04B 1/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 텍스트(text), OCR(optical character recognition), 객체(object), 크기(size), 중첩 (overlap), 경계선(border line), 디스플레이(display), 색상(color), 폰트(font), 객체(object), 비용함수(cost function), 분포 (distribution)

### C. DOCUMENTS CONSIDERED TO BE RELEVANT

| Category* | Citation of document, with indication, where appropriate, of the relevant passages | Relevant to claim No. |
|---|---|---|
| Y | KR 10-2014-0133153 A (LG ELECTRONICS INC.) 19 November 2014 (2014-11-19)<br>See paragraphs [0039], [0058], [0081], [0088], [0110] and [0113]; and figures 1-2 and 3b. | 1,4,9,12 |
| A | | 2-3,5-8,10-11,13-15 |
| Y | JP 2012-238124 A (KYOCERA CORP.) 06 December 2012 (2012-12-06)<br>See paragraphs [0040]-[0041]; and figures 3-4. | 1,4,9,12 |
| A | KR 10-2019-0021146 A (SAMSUNG ELECTRONICS CO., LTD.) 05 March 2019 (2019-03-05)<br>See paragraphs [0068]-[0116]; and figures 4-7. | 1-15 |
| A | KR 10-2021-0156228 A (BEIJING BAIDU NETCOM SCIENCE AND TECHNOLOGY CO., LTD.) 24 December 2021 (2021-12-24)<br>See paragraphs [0021]-[0029]; and figure 1. | 1-15 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 December 2023** | **07 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/012361** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2022-0006237 A (SAMSUNG ELECTRONICS CO., LTD.) 17 January 2022 (2022-01-17)<br>See paragraphs [0042]-[0062]; and figures 3-5. | 1-15 |

Form PCT/ISA/210 (second sheet) (July 2022)

## INTERNATIONAL SEARCH REPORT
### Information on patent family members

International application No.

**PCT/KR2023/012361**

| Patent document cited in search report | | | Publication date (day/month/year) | Patent family member(s) | | | Publication date (day/month/year) |
|---|---|---|---|---|---|---|---|
| KR | 10-2014-0133153 | A | 19 November 2014 | KR | 10-2032407 | B1 | 16 October 2019 |
| JP | 2012-238124 | A | 06 December 2012 | JP | 5722696 | B2 | 27 May 2015 |
| | | | | US | 10073597 | B2 | 11 September 2018 |
| | | | | US | 10082938 | B2 | 25 September 2018 |
| | | | | US | 2012-0287067 | A1 | 15 November 2012 |
| | | | | US | 2015-0169198 | A1 | 18 June 2015 |
| | | | | US | 2015-0169199 | A1 | 18 June 2015 |
| | | | | US | 8963860 | B2 | 24 February 2015 |
| KR | 10-2019-0021146 | A | 05 March 2019 | KR | 10-2457894 | B1 | 25 October 2022 |
| | | | | US | 2019-0065476 | A1 | 28 February 2019 |
| KR | 10-2021-0156228 | A | 24 December 2021 | CN | 111860479 | A | 30 October 2020 |
| | | | | EP | 3926526 | A2 | 22 December 2021 |
| | | | | EP | 3926526 | A3 | 16 February 2022 |
| | | | | JP | 2021-197190 | A | 27 December 2021 |
| | | | | JP | 7217313 | B2 | 02 February 2023 |
| | | | | US | 11694461 | B2 | 04 July 2023 |
| | | | | US | 2021-0390296 | A1 | 16 December 2021 |
| KR | 10-2022-0006237 | A | 17 January 2022 | CN | 115803747 | A | 14 March 2023 |
| | | | | EP | 4162389 | A1 | 12 April 2023 |
| | | | | US | 2022-0012409 | A1 | 13 January 2022 |
| | | | | WO | 2022-010279 | A1 | 13 January 2022 |

Form PCT/ISA/210 (patent family annex) (July 2022)